# EUROPEAN PATENT SPECIFICATION

(11) **EP 3 172 024 B1**
(45) Date of publication and mention of the grant of the patent: **06.02.2019**
(21) Application number: 15714803.2
(22) Date of filing: 01.04.2015
(51) Int. Cl.: B29C 45/27, B29C 45/28

(54) **SIDE GATING NOZZLE FOR INJECTION MOLDING APPARATUS**
SEITLICHE ANGUSSDÜSE FÜR SPRITZGIESSVORRICHTUNG
BUSE À ENTRÉE LATÉRALE POUR DISPOSITIF DE MOULAGE PAR INJECTION

(30) Priority: 01.04.2014 DE 102014004779
(43) Date of publication of application: 31.05.2017
(73) Proprietor: Otto Männer Innovation GmbH, 79353 Bahlingen (DE)
(72) Inventor: SPULLER, Swen, 79362 Forchheim (DE)
(74) Representative: Dunkel, Christoph
(86) International application number: PCT/EP2015/057270
(87) International publication number: WO 2015/150501

(56) References cited:
- EP-A1- 1 938 945
- JP-A- S55 140 537
- US-A1- 2003 003 188
- US-A1- 2008 152 752

## Description

The present invention relates to a hot runner nozzle which is connectable to a melt outlet opening of a hot runner manifold, comprising a nozzle flange portion, a nozzle body portion and a nozzle bridge portion having at least two adjacently arranged nozzle tip sections and at least two valve pins connected to a valve pin actuating device.

Side gating nozzles for injection molding are known in the prior art. For instance, EP 1 380 400 B1 discloses an injection molding nozzle comprising at least two outlet openings directed to opposing sides and intended for feeding different gates and comprising a feed channel for feeding melt to outlet openings, which are located in nozzle tip sections being directed to opposing sides. Each nozzle tip section comprises a valve with a valve pin that is moveable in the direction of the outlet opening and an actuator which serves for moving the valve pins to open and close the outlet openings. The prior art documents US 2008/152752 A1 and EP 1 938 945 A1 also disclose side gating nozzles.

The nozzle tips are arranged in mold orifices to establish a sealing connection between the outlet opening of the nozzle and the inlet opening of the mold cavity. For a proper operation of the nozzles in an injection molding process, each nozzle tip has to seat exactly in the corresponding orifice of the mold thereby preventing leakage of the melt and wear of the valve pin and the actuating device due to stress on the valve pin resulting from insufficient aligning of the axis of the valve pin and the axis of the mold orifice. The permissible tolerances of nozzle and mold are narrow and are applicable for injection molding nozzles as disclosed in EP 1 380 400 B1. However, if a nozzle comprises more than one nozzle tip arranged side by side and being directed in substantially the same direction, the manufacturing tolerances of the mold and the nozzles also have to involve the tolerances referring to the distance between these side by side arranged nozzle tips. This results in challenging demands with respect to precise manufacturing, thus resulting in increasing manufacturing costs.

Therefore, it is an object of this invention to provide an improved nozzle for side gating allowing a cost efficient manufacturing and having an improved aligning of the valve pins with the mold orifices.

An improvement in hot runner nozzles and in injection molding apparatuses is achieved by the solution of the independent claim. Further developments of the invention form the subject matter of the dependent claims.

The invention proposes a hot runner nozzle for side gating for an injection molding machine, which is connectable to a melt outlet opening of a hot runner manifold and comprises a nozzle flange portion, a nozzle body portion and a nozzle bridge portion. The nozzle bridge portion has at least two adjacently arranged nozzle tip sections, and at least two valve pins coupled to a valve pin actuating device, which is moveable back and forth along a first axis A, whereby the at least two valve pins are moveable along a second axis B. The second axis B is arranged at an angle α to the first axis A. The nozzle tip sections are connected to one another adjacent to the nozzle body portion and separated by a nozzle bridge separator in the form of a gap, which extends through the nozzle bridge portion from the front end of the nozzle bridge portion in the direction of the first axis between and in parallel to the at least two valve pins. The nozzle bridge separator is designed particularly in its height and width so as to accommodate movements of the nozzle tip sections allowing the nozzle tip sections to move in particular in a direction C which is perpendicular to the first axis A and also perpendicular to the second axis B.

As the nozzle tip sections are allowed to move in the direction C by increasing and reducing the nozzle tip separator (gap), the nozzle tip sections can compensate manufacturing tolerances and the nozzle tips can move into a position, where the axes of the valve pins align with the axes of the mold orifices. Unlike machining the nozzle with more narrow manufacturing tolerances, it is more cost efficient to provide the nozzle bridge separator.

The nozzle bridge portion has at least two adjacently arranged nozzle tip sections, each comprising a nozzle tip for guiding melt into a mold cavity. Within each nozzle tip a valve pin is arranged, which is coupled to a valve pin actuating device. The valve pin actuation device is moveable back and forth along a first axis A for moving the valve pins along a second axis B to open and close the valves of the nozzle and thereby controlling the flow of melt into the respective mold cavities.

The nozzle bridge separator is arranged within the nozzle bridge portion, adjacent the nozzle body portion opposite to the nozzle flange portion. A nozzle bridge separator divides the front end of the nozzle bridge portion and extends in the direction of the first axis through the nozzle bridge, thereby separating the nozzle bridge in a direction towards the nozzle body portion. The nozzle bridge separator ends adjacent to the nozzle body portion, whereby the nozzle tip sections and the nozzle bridge portion remain connected.

As the nozzle bridge separator is provided between and in parallel to the at least two valve pins, the valve pins can move in a direction C which is perpendicular to the valve pin axis B. The nozzle bridge separator is thereby increased and reduced, respectively. This means, that the valve pin is moved as a whole about a certain distance. Thus, this movement does not imply stress to the valve pin and the valve pin actuator, and therefore does not lead to wear of the valve pin and the valve pin actuator, respectively.

The number of nozzle bridge separators which are provided at a nozzle bridge depends in particular on the number and the design of the nozzle tip sections. It is possible to provide a nozzle tip separator arranged between each adjacent nozzle tip sections. It is also possible that due to the design of the mold or the nozzle bridge, in particular if there are more than two nozzle tip sections arranged side by side, not to provide a nozzle bridge separator between each of the nozzle tip sections.

In one embodiment of the hot runner nozzle, the nozzle bridge separator includes a load relieving recess. Any movement between the nozzle tip sections results in stress in the area of the nozzle bridge portion next to the end of the nozzle bridge separator. For reducing the stress in this area of the nozzle bridge portion, a load relieving recess may be used to reduce the stress concentration in the area around the end of the nozzle bridge separator. A load relieving recess also serves for increased mobility of the nozzle tip sections.

The angel α between the axis A of the hot runner nozzle and the axis B of the valve pin is arranged dependent on the requirements of the injection molding process and the design of the cavity. For common applications of hot runner nozzles for side gating, the angel α is in the range of 80° to 160°, in particular, in the range of 85° to 135° and more in particular in the range of 90° to 120°. In many applications the first axis A is arranged substantially perpendicular (α = 90°) to the second axis B.

In one embodiment of the hot runner nozzle, each nozzle tip section comprises a pin guide device for the valve pin which in particular supports and guides the valve pin to foster a smooth movement of the valve pin and therefore also to prevent wear of the valve pin.

In one embodiment, at least one nozzle tip arrangement is coupled to each nozzle tip section. A nozzle tip arrangement comprises a nozzle tip and a nozzle seal. Having a nozzle tip arrangement mounted to the nozzle tip section in particular facilitates the mounting of the valve pins to the nozzle and the servicing of the hot runner nozzle.

In one embodiment, the nozzle tip sections include detachably connected nozzle tip retainers. Nozzle tip retainers for mounting at an injection molding nozzle are less complex to manufacture and to service than nozzle tip retainers which are integrally formed with the hot runner nozzle. For example, in case of a malfunction of the nozzle valve, it is possible to simply replace the nozzle tip retainer.

In one embodiment, the hot runner nozzle comprises a valve pin connector, which continuously connects the valve pin actuating device to the at least two valve pins. A respective adjustment gap is provided between each valve pin and the valve pin connector in order to provide a loose connection between the valve pin and the valve pin connector. Such a design prevents stress between the moving parts and thus also reduces wear.

In one embodiment, the nozzle bridge sections are arranged in two rows, such that each nozzle tip of a first row is arranged back to back with a corresponding nozzle tip of a second row, wherein each nozzle tip of the first row and the corresponding nozzle tip of the second row form a nozzle tip pair coupled to one nozzle tip section, wherein a gap is positioned between the nozzle tip sections, in particular between all of the nozzle tip sections.

In such an embodiment, due to the arrangement of the nozzle tip pairs, at least one pair of outlet openings are disposed opposite one another relative to the axis A in the nozzle tip section of the injection molding nozzle, directed toward different, in particular opposing sides of the nozzle, for discharging to different mold cavities, each of the outlet openings including a valve with a valve pin adjustable in a direction of the respective outlet opening.

In one embodiment of the hot runner nozzle stressing of the valve pins and stress between the valve pins and the valve pin actuating device is reduced by means of an adjustment gap arranged therebetween which can compensate tolerances and movements between the parts, respectively.

In one embodiment the hot runner nozzle comprises a nozzle bridge carrier portion which is arranged between the nozzle body portion and at least two nozzle bridge portions. Each nozzle bridge portion is separately coupled to the nozzle bridge carrier portion and - as the nozzle bridge carrier portion is arranged between the nozzle bridge portion and the nozzle body portion - the nozzle tip sections are connected adjacent to the nozzle bridge carrier portion.

In one embodiment of the hot runner nozzle having a nozzle bridge carrier portion, this nozzle bridge carrier portion comprises at least two nozzle bridge carrier sections which are connected to one another adjacent to the nozzle body portion and separated by a nozzle bridge carrier separator in the form of a gap. The nozzle bridge carrier separator extends through the nozzle bridge carrier portion from the lower side of the nozzle bridge carrier portion, which is arranged at the opposite side with respect to the nozzle body portion in the direction of the first axis A and in parallel to the at least two valve pins. The nozzle bridge carrier separator is designed similar to the nozzle bridge separator. Hence, it is designed in particular in its height and width so as to accommodate movements of the nozzle bridge carrier sections and thus of the nozzle bridge portions allowing the nozzle bridge portions and thereby the nozzle tip sections to move in particular in the direction C which is perpendicular to the first axis A and also perpendicular to the second axis B.

The enabled relative movement of the nozzle tip sections serves for limiting the movement between the nozzle tips and the mold orifices, and therefore decouples, disrupts and disconnects the relative movement at the connection between nozzle tip and mold cavity. This further prevents stress to the valve pins which are moving within the valve tips.

The nozzle bridge carrier separator is arranged within the nozzle bridge carrier portion, adjacent to the nozzle body portion opposite to the nozzle flange portion. The nozzle bridge separator divides the lower end of the nozzle bridge carrier portion and extends in the direction of the first axis through the nozzle bridge carrier portion, thereby separating the nozzle bridge carrier in a direction towards the nozzle body portion. The nozzle bridge carrier separator ends adjacent to the nozzle body portion, whereby the nozzle bridge carrier portions remain connected. In an embodiment with more than two nozzle bridge portions coupled to the nozzle bridge carrier, it is possible to arrange a nozzle bridge carrier separator between respectively two the nozzle bridge carrier sections. In one embodiment, there is one nozzle bridge carrier separators arranged between each two nozzle bridge carrier sections to which a nozzle bridge portion is coupled.

Within the nozzle bridge carrier portion, elements of the valve pin actuator device for actuating the valve pins and melt channels for guiding melt to the mold cavities are arranged. As the nozzle bridge carrier separator is provided between and in parallel to the at least two valve pins, the valve pins gain additional flexibility to move in particular in the direction C which is perpendicular to the valve pin axis B. The nozzle bridge carrier separator is thereby increased and reduced, respectively. This further supports that the valve pins can move as a whole about a certain distance. Thus, this movement does not imply stress to the valve pin and the valve pin actuator, and therefore does not lead to wear of the valve pin and the valve pin actuator, respectively.

In one embodiment of the hot runner nozzle, the nozzle bridge carrier separator includes a load relieving recess which is designed similar to the load relieving recess as described for the nozzle bridge separator. As any movement between the nozzle tip sections results in stress in the area of the nozzle bridge carrier portion next to the end of the nozzle bridge carrier separator, a load relieving recess may be used to reduce the stress concentration in the area around the end of the nozzle bridge carrier separator. Such a load relieving recess also serves for additional mobility of the nozzle tip sections.

In one embodiment, each row, e.g. each row of the nozzle tip sections comprises four nozzle tip sections, so that the nozzle forms an eight-drop nozzle.

In one embodiment, the at least one nozzle bridge separator and/ or the at least one nozzle bridge carrier separator is/ are configured to compensate a misalignment, that is a mismatch or offset, between the nozzle and an installation location in an injection molding apparatus, in particular between the nozzle flange portion and/or the nozzle body portion and/or the one or more nozzle tip sections and a corresponding installation location in the injection molding apparatus. Further stress to the valve pin and the valve pin actuation device is thereby reduced.

In one embodiment, the at least one nozzle bridge separator and/ or the at least one nozzle bridge carrier separator is/ are configured to compensate a misalignment, that is a mismatch or offset, between each of the one or more nozzle tip portions and a corresponding gate opening for each nozzle tip portion. A gate opening may be formed by a cavity insert forming a cavity and allows for center the nozzle tip portion or nozzle tip within the gate opening. Thus, melt flow without leakage is possible.

In one embodiment, the one at least one nozzle bridge separator and/ or the at least one nozzle bridge carrier separator are configured to compensate manufacturing tolerances of the nozzle, in particular to compensate manufacturing tolerances of the nozzle flange portion and/ or of the nozzle body portion and/ or of the one or more nozzle bridge portions and/ or the nozzle carrier portion.

A further aspect of the invention refers to a hot runner injection molding apparatus which comprises a hot runner manifold having a melt inlet channel and a number of melt outlet openings and a number of hot runner nozzles for side gating as disclosed above, wherein each hot runner nozzle is coupled to one melt outlet opening of the manifold.

In one embodiment of this hot runner injection molding apparatus, a number of mold cavities are arranged at the hot runner nozzles. Thereby the nozzle seals of the hot runner nozzles are held in openings which are arranged at the mold cavities to establish a connection for guiding melt into the mold cavities.

A further aspect refers to a hot runner injection molding apparatus which comprises a nozzle for side gating into at least two mold cavities which are situated on the same size of the nozzle relative to a first axis A of the nozzle, whereby the nozzle is connectable to a melt outlet opening of a hot runner manifold and also connectable to an injection molding machine.

The hot runner nozzle for side gating of this hot runner injection molding apparatus comprises a nozzle flange portion arranged adjacent to the manifold, a nozzle body portion arranged under the flange portion and a nozzle bridge portion arranged under the nozzle body portion. The nozzle bridge portion has at least two adjacently arranged nozzle tip sections, and each tip section retains a nozzle tip portion comprising a nozzle tip melt channel. The hot runner nozzle further comprises at least two valve pins which are coupled to a valve pin actuating device. The valve pin actuating device is moveable back and forth along the first axis A, whereby the at least two valve pins are moveable inside the nozzle tip melt channels along a second axis B, which is arranged at an angle (α) to the first axis A.

The nozzle bridge portion of the hot runner nozzle for side gating of one embodiment of the hot runner injection molding apparatus comprises at least two side by side nozzle tip sections that are securely fixed at the two mold cavities, the nozzle tip sections are connected adjacent to the nozzle body portion and are separated by a nozzle bridge separator in the form of a gap, having a close end and an open end, which extends through the nozzle bridge portion from the front end of the nozzle bridge portion up to the nozzle body portion in the direction of the first axis A between and in parallel to the at least two valve pins.

The position, the height and width of the nozzle bridge separator is particularly designed and adapted to increase or reduce the gap during the injection process to enable relative movement between the two nozzle tips and thus relative movement between the at least two valve pins and the valve pin actuating device.

The relative movement of the nozzle tips which is enabled due to the design of the proposed nozzle for side gating serves for limiting the movement between the nozzle tips and the mold orifices, and therefore decouples, disrupts and/ or disconnects the relative movement at the connection between nozzle tip and mold cavity as well as reduces stress to the valve pin and the valve pin actuator.

Further advantages, features and possible applications of the present invention will be described in the following in conjunction with the figures.

Shown are:
- Fig. 1:: a sectional view of an exemplary hot runner injection molding apparatus;
- Fig. 2a:: a side view of an exemplary hot runner nozzle;
- Fig. 2b:: a front view of the exemplary hot runner nozzle;
- Fig. 3a:: a top plan view of the exemplary hot runner nozzle;
- Fig. 3b:: a sectional view of the exemplary hot runner nozzle in the region of the nozzle bridge and the nozzle tip retainer;
- Fig. 4a:: a sectional view through a mold and through a hot runner nozzle arranged therein;
- Fig. 4b:: an enlarged depiction of the circled detail of the hot runner nozzle from Fig. 4a;
- Fig. 5a:: a further sectional view through a mold and through a hot runner nozzle arranged therein of a further exemplary embodiment;
- Fig. 5b:: a partial sectional view of a further exemplary hot runner injection molding apparatus;
- Fig. 6a, 6b:: side views of the exemplary hot runner nozzle from Fig. 5b; and
- Fig. 7:: a perspective view of the exemplary hot runner nozzle of Figs. 6a and 6b.

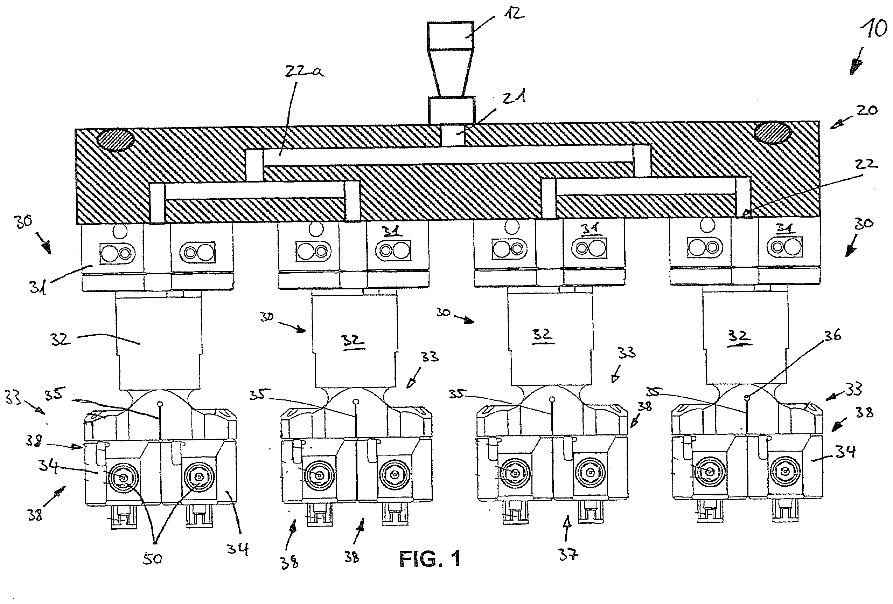

Fig. 1 shows a sectional view of an exemplary hot runner injection molding apparatus 10. The hot runner manifold 20 is arranged with its inlet opening 21 on a machine nozzle 12 of an injection molding machine. The melt passage 22a of the hot runner manifold 20 comprises a plurality of branching points and conducts melt from the inlet opening 21 to a plurality of outlet openings 22.

A hot runner nozzle 30 for side gating is arranged at each outlet opening 22 of the hot runner manifold 20. Fig. 1 depicts four hot runner nozzles 30. Each hot runner nozzle 30 comprises a nozzle flange 31, a nozzle body section 32, a nozzle bridge section 33 having two adjacently arranged nozzle tip sections 38. In this exemplary embodiment, each nozzle tip section 38 include a detachably connected nozzle tip retainer 34 with nozzle tips 50. The nozzle bridge portion 33 comprises two nozzle sections 38. A nozzle bridge separator 35 in the form of a gap (recess) is arranged in the nozzle bridge portion 33.

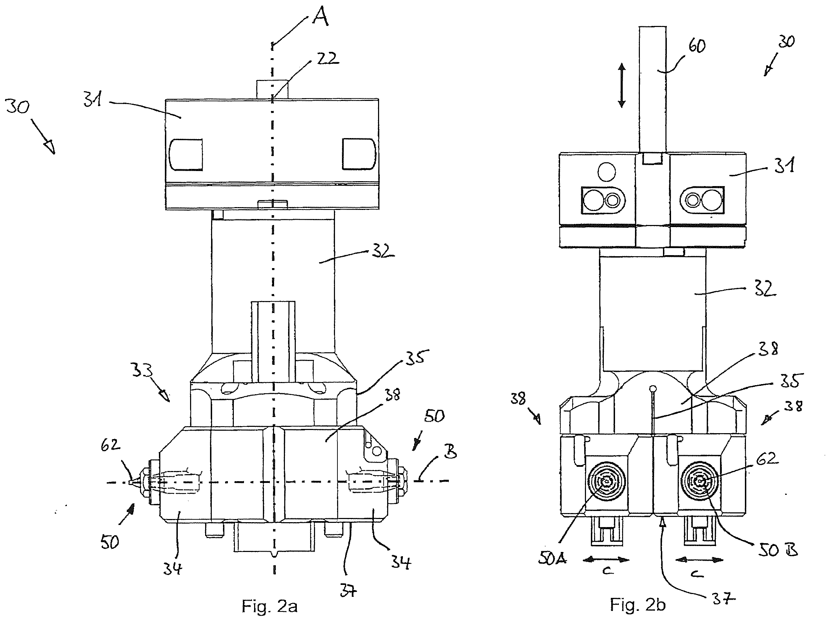

Fig. 2a shows a side view of an exemplary hot runner nozzle 30. The outlet opening 22 of the hot runner manifold 20 is indicated on top of the nozzle flange portion 31. Nozzle melt passages, which are not shown, run through the hot runner nozzle 30 to the nozzle tips 50. The hot runner nozzle 30 comprises a nozzle flange portion 31, a nozzle body portion 32 and a nozzle bridge portion 33 having at least two adjacently arranged nozzle tip sections 38, and four valve pins coupled to a valve pin actuating device (not shown in Fig. 2a), which is moveable back and forth along a first axis A, whereby the at least two valve pins 62, 63 are moveable along a second axis B, which is arranged at an angle α = 90° to the first axis A.

Fig. 2b shows the front view of the exemplary hot runner nozzle 30 of Fig. 2a. The upper end of the valve pin actuating device 60, which is movable in the direction of the first axis A, is shown at the upper end of the nozzle flange portion 31. The nozzle tip sections 38 are connected to one another adjacent to the nozzle body portion 32 and separated by the nozzle bridge separator 35, which extends through the nozzle bridge portion 33 from the front end 37 of the nozzle bridge portion 33 in the direction of the first axis A between and in parallel to the valve pins 62, 63. The nozzle bridge separator 35 accommodates movements of the nozzle tip sections 38 allowing them to move in a direction C which is perpendicular to the first axis A and also perpendicular to the second axis B.

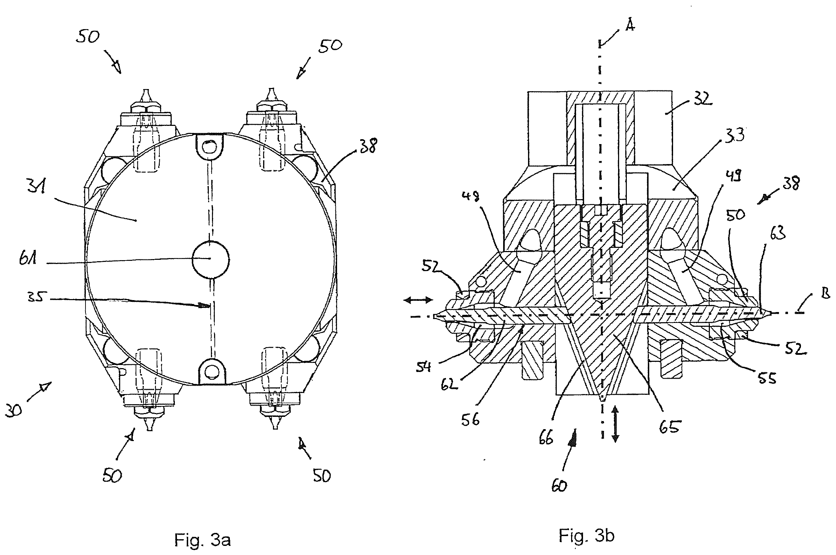

Fig. 3a shows a top plan view of the exemplary hot runner nozzle 30. An opening 61 for the valve pin actuating device 60 is depicted at the center of the nozzle flange 31. The same reference numerals used in the preceding figures are used to identify the same elements of the hot runner nozzle 30. The nozzle bridge separator 35 is indicated in dashed lines.

Fig. 3b shows a cross section perpendicular to the axis A and at the position of the axis B through the side view (Fig. 2a) of the exemplary hot runner nozzle. The representation shows a sectional view of the region of the nozzle bridge portion 33 and the nozzle tip section 38. Fig. 3b depicts the valve pin actuating device 60 in the region of valve pins 62 and 63. A valve pin connector 65 exhibiting a continuously tapered shape, in the form of a wedge in the sectional view, is arranged at the lower end of the valve pin actuating device 60. Guide devices 66 are arranged on the valve pin connector 65 which continuously connects the valve pin connector 65 to the respective end of the valve pins 62 and 63 such that a movement of the valve pin actuating device 60 in the direction of the first axis A leads to the valve pins 62 and 63 moving in the direction of the second axis B within the pin guide devices 56 and 57 configured in the nozzle tip sections 38. In so doing, the nozzle tips 50 can thus be opened and closed by means of a movement of the valve pin actuating device 60.

Nozzle tips 50, with a nozzle seal 52 arranged on their front end, are held in the nozzle tip sections 38. The junction of the nozzle tip section melt passage sections 48 and 49 with the nozzle tip melt passages 54 and 55 is also readily visible.

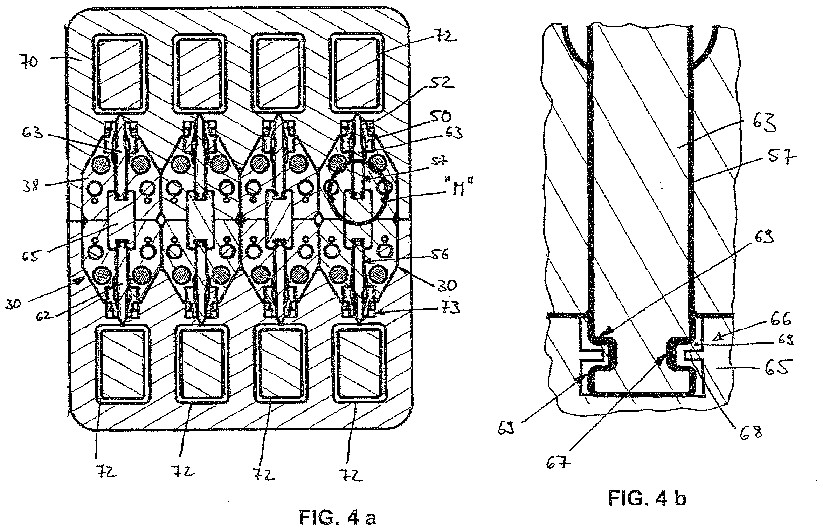

Fig. 4a shows a sectional view through a mold 70 and through two hot runner nozzles 30 arranged therein side by side. Eight mold cavities 72 are arranged in the exemplary mold 70. An arrangement of two exemplary hot runner nozzles 30 is provided to fill the mold cavities 72. The section through the mold 70 as well as the hot runner nozzle 30 arranged therein extends in the plane of the second axis B through the valve pins 62, 63 of the hot runner nozzles 30. As readily recognizable, the nozzle seals 52 seat into openings 73 arranged on the mold cavities 72.

Fig. 4b shows an enlarged depiction of the circled hot runner nozzle detail "M" from Fig. 4a. The guide devices 66 arranged on the valve pin connector 65, which continuously connect the valve pin connector 65 to the respective end of the valve pin 63, are readily recognizable in this representation. The end of the valve pin 63 is configured so as to be positively connectable to the guide device 66. In the exemplary embodiment depicted, the valve pin comprises a circumferential guiding groove 67 which engages in the guide device 66 configured as projection 68 in the exemplary embodiment. An adjustment gap 69 is provided between the valve pin 63 and the valve pin connector 65 in order to provide a loose connection between the valve pin 63 and the valve pin connector 65.

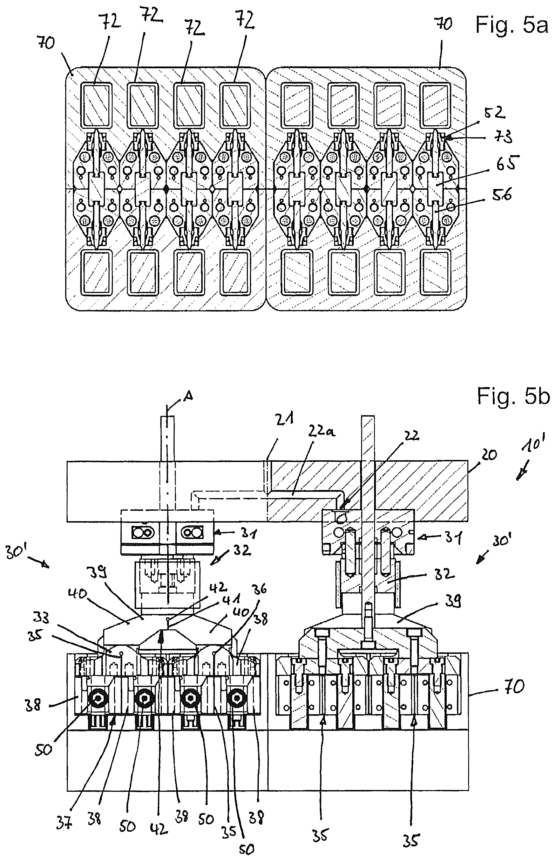

Fig. 5a shows a further sectional view through two molds 70 and through two hot runner nozzles 30' arranged therein. The same reference numerals used in the preceding figures are used to identify the same elements. The nozzle bridge separator 35 is shown in dashed lines Sixteen mold cavities 72 are arranged in the two exemplary molds 70 arranged side by side. An arrangement of two exemplary hot runner nozzles 30' is provided for filling sixteen mold cavities 72.

The section through the molds 70 as well as through the hot runner nozzles 30' arranged therein extends in the plane of the second axis B through the valve pins 62, 63 of the hot runner nozzles 30'. As readily recognizable, the nozzle seals 52 seat within openings 73 arranged on the mold cavities 72.

Fig. 5b shows a partial sectional view of a further exemplary hot runner injection molding apparatus 10' which is a side view of the embodiment of Fig. 5a. In Fig. 5b a manifold 70 of the injection molding apparatus 10' is shown with a melt passage 22a and two nozzles 30'. Each nozzle comprises several portions, that is, a nozzle flange portion 31, a nozzle body portion 32, a nozzle bridge carrier portion 39 having two nozzle bridge carrier sections 40 and a nozzle bridge portion 33 having four nozzle tip sections 38, each with a nozzle tip portion 50. The manifold 20 is in contact with the nozzle flange portion 31, wherein an inlet melt channel 21 is split to two outlet openings 22.

As can be taken from Fig. 5b, the hot runner nozzle 30' for side gating comprises a nozzle bridge carrier portion 39 with two nozzle bridge carrier sections 40 which are connected to one another adjacent to the nozzle body portion 32 and separated by a nozzle bridge carrier separator 41 in the form of a gap with a load relieving recess 42. The nozzle bridge carrier separator 41 extends through the nozzle bridge carrier portion 39 from the lower side 42 of the nozzle bridge carrier portion 39 in the direction of the first axis A and in parallel to the at least two valve pins 62, 63. The nozzle bridge carrier separator 41 has a height and width so as to accommodate movements of the nozzle bridge carrier sections and thus also the nozzle bridge portions 33, allowing the nozzle bridge portions 33 and thereby the nozzle tip sections 38 to move in particular in the direction C.

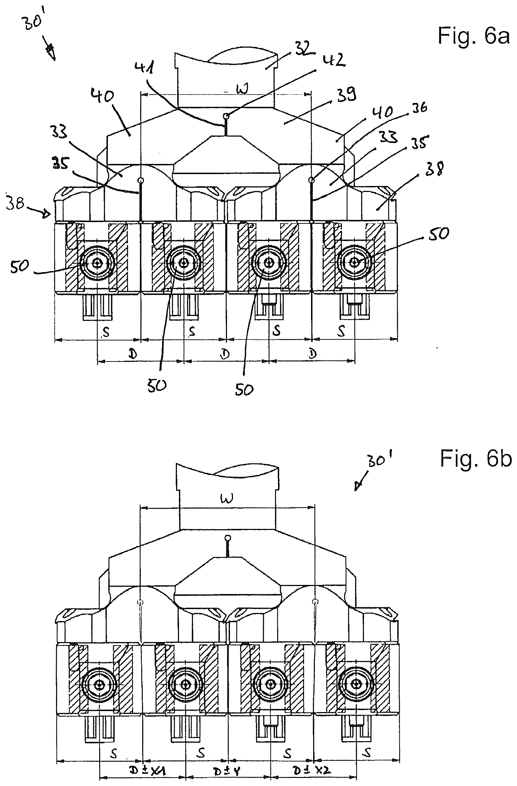

Figs. 6a and 6b show side views of the exemplary hot runner nozzle 30' from Fig. 5b. Fig. 6a shows the nozzle 30' not mounted to the mold 70, wherein Fig. 6b shows the nozzle 30' in a situation when its nozzle tips 50 are mounted at mold openings 73 of the mold 70. In Fig. 6a the distances D of the nozzle tips 50 are shown, which corresponds to the distances of the mold openings 73 which are arranged at the mold cavities 72, and which serve to accommodate the nozzle seals 52. As the dimension S of the nozzle tip section 38 is fix, a movement of the nozzle tip sections 38 due to the nozzle bridge separator 35 (increasing or decreasing the gap) allows an adjustment of the distance D by an amount X1, X2 as is shown in Fig. 6b. In the same way, a movement of the nozzle bridge carrier sections 40 due to the nozzle bridge carrier separator 41 (increasing or decreasing the gap) allows an adjustment of the distance D by an amount Y, as is also shown in Fig. 6b. The movements of the nozzle bridge sections 38 and the nozzle bridge carrier sections 40 superpose to a certain degree. This helps to achieve an alignment of the nozzle tips 50 with the mold openings also with larger manufacturing tolerances and even if dimensions change due to variations during the injection molding process due to the operation of the injection molding machine as for example thermal influences, vibrations or running-in processes.

As can be taken from Figs. 6a and 6b, for example during mounting of the nozzle to the mold, an expansion or a narrowing of the gap about a distance X in direction "C" is possible for two adjacent arranged nozzle tips, whereas simultaneous no change in distance between two other adjacent nozzle tips may happen. In the same way, for example the distance D between one pair of adjacent nozzle tips may increase whereas simultaneous the distance between another pair of adjacent nozzle tips may decrease.

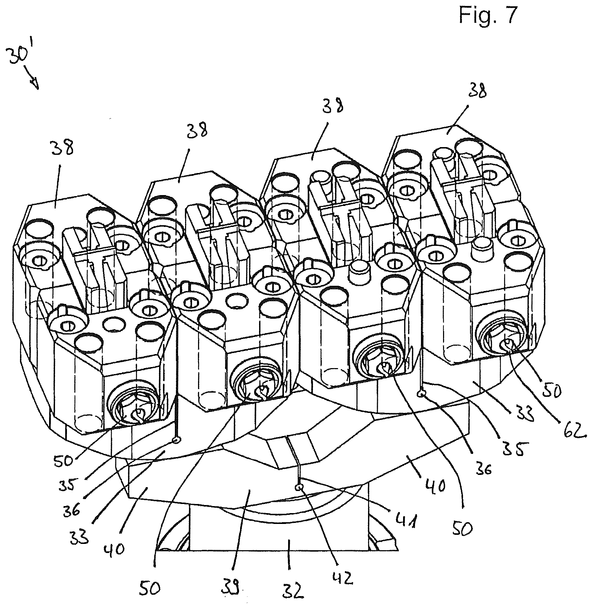

Fig. 7 shows a perspective or 3D-view of the eight-drop nozzle 30' of Figs. 6a and 6b, wherein two nozzle bridge separators 35 and one nozzle bridge carrier separator 41 are depicted. As is also shown in Figs. 6a and 6b, a nozzle bridge carrier separator 41 is arranged at the nozzle bridge carrier 39, between the two nozzle bridge carrier sections 40.

## Claims

1. A hot runner nozzle (30) for side gating for an injection molding machine, connectable to a melt outlet opening (22) of a hot runner manifold (20) and comprising
a nozzle flange portion (31), a nozzle body portion (32) and a nozzle bridge portion (33) having at least two adjacently side by side arranged nozzle tip sections (38), and
at least two valve pins (62, 62, 63, 63) coupled to a valve pin actuating device (60), which is moveable back and forth along a first axis (A), whereby the at least two valve pins (62, 62, 63, 63) are moveable along parallel second axes (B), which are arranged at an angle (α) to the first axis (A),
**characterized in that**
the side by side arranged nozzle tip sections (38) are connected to one another adjacent to the nozzle body portion (32) and separated by a nozzle bridge separator (35) in the form of a gap, which extends through the nozzle bridge portion (33) from the front end (37) of the nozzle bridge portion (33) in the direction of the first axis (A) between and in parallel to the at least two valve pins (62, 62, 63, 63)
wherein
the nozzle bridge separator (35) is designed particularly in its height and width so as to accommodate movements of the nozzle tip sections (38) allowing the nozzle tip sections (38) to move in a direction (C) which is perpendicular to the first axis (A) and also perpendicular to the second axes (B).

2. The hot runner nozzle according to claim 1, **characterized in that** the nozzle bridge separator (35) includes a load relieving recess (36).

3. The hot runner nozzle according to any one of the preceding claims, **characterized in that** the angle (α) between the first axis (A) and the second axis (B) is in the range of 80° to 160°, in particular the first axis (A) is substantially perpendicular (α = 90°) to the second axis (B).

4. The hot runner nozzle according to any one of the preceding claims, **characterized in that** each nozzle tip section (38) comprises a pin guide device (56, 57) for the valve pin (62, 63).

5. The hot runner nozzle according to any one of the preceding claims, **characterized in** at least two nozzle tip arrangements, each coupled to one of the at least two nozzle tip sections (38), wherein the nozzle tip arrangement comprises a nozzle tip (50) and a nozzle seal (52).

6. The hot runner nozzle according to any one of the preceding claims, wherein the nozzle tip sections (38) include detachably connected nozzle tip retainers (34).

7. The hot runner nozzle according to any one of the preceding claims, **characterized in that** each hot runner nozzle (30) comprises a valve pin connector (65), which continuously connects the valve pin actuating device (60) to the at least two valve pins (62, 62, 63, 63), wherein a respective adjustment gap (69) is provided between each valve pin (62, 63) and the valve pin connector (65) in order to provide a loose connection between the valve pin (62, 63) and the valve pin connector (65).

8. The hot runner nozzle according to any one of the preceding claims, **characterized in that** stressing of the valve pins (62, 63) and stress between the valve pins (62, 63) and the valve pin actuating device (60) is reduced by means of an adjustment gap (69) arranged therebetween.

9. The hot runner nozzle according to any one of the preceding claims, **characterized in** a nozzle bridge carrier portion (39) arranged between the nozzle body portion (32) and at least two nozzle bridge portions (33), wherein the nozzle tip sections (38) are connected adjacent to the nozzle bridge carrier portion (39).

10. The hot runner nozzle according to claim 9, **characterized in that** the nozzle bridge carrier portion (39) comprises at least two nozzle bridge carrier sections (40) which are connected to one another adjacent to the nozzle body portion (32) and separated by a nozzle bridge carrier separator (41) in the form of a gap, which extends through the nozzle bridge carrier portion (39) from the lower side (42) of the nozzle bridge carrier portion (39) in the direction of the first axis (A) and in parallel to the at least two valve pins (62, 62, 63, 63), wherein the nozzle bridge carrier separator (41) is designed particularly in its height and width so as to accommodate movements of the nozzle bridge carrier sections (40) and of the nozzle bridge portions (33) allowing the nozzle bridge portions (33) and thereby the nozzle tip sections (38) to move in the direction (C).

11. The hot runner nozzle according to claim 10, **characterized in that** the nozzle bridge carrier separator (41) includes a load relieving recess (43).

12. A hot runner injection molding apparatus (10) comprising:
a hot runner manifold (20) having a melt inlet channel (21) and a number of melt outlet openings (22) and
a number of hot runner nozzles (30) according to one of claims 1 to 11, each coupled to one melt outlet opening (22) of the manifold (20).

13. The hot runner injection molding apparatus according to claim 12, **characterized in that** a number of mold cavities (72) are arranged at the hot runner nozzles (30), wherein nozzle seals (52) of the hot runner nozzles (30) are held in openings (73) arranged at the mold cavities (72).

## Patentansprüche

1. Heißkanaldüse (30) zur seitlichen Anspritzung für eine Spritzgussmaschine, verbindbar mit einer Schmelzauslassöffnung (22) eines Heißkanalverteilers (20) und aufweisend
einen Düsenflanschabschnitt (31), einen Düsenkörperabschnitt (32) und einen Düsenbrückenabschnitt (33), die mindestens zwei aneinander angrenzende, seitlich nebeneinander angeordnete Düsenspitzenabschnitte (38) aufweisen, und
mindestens zwei Ventilstifte (62, 62, 63, 63), die mit einer Ventilstiftbetätigungsvorrichtung (60) verbunden sind, die entlang einer ersten Achse (A) vorwärts und rückwärts beweglich sind, wobei die mindestens zwei Ventilstifte (62, 62, 63, 63) entlang paralleler zweiter Achsen (B) beweglich sind, die in einem Winkel (α) zur ersten Achse (A) angeordnet sind,
**dadurch gekennzeichnet, dass**
die seitlich nebeneinander angeordneten Düsenspitzenabschnitte (38) neben dem Düsenkörperabschnitt (32) miteinander verbunden sind und durch einen Düsenbrückenseparator (35) in Form eines Zwischenraumes, der sich durch den Düsenbrückenabschnitt (33) vom Vorderende (37) des Düsenbrückenabschnitts (33) in Richtung der ersten Achse (A) zwischen und parallel zu den mindestens zwei Ventilstiften (62, 62, 63, 63) erstreckt, voneinander getrennt sind,
wobei
der Düsenbrückenseparator (35) insbesondere in seiner Höhe und Breite derart ausgestaltet ist, um die Bewegungen der Düsenspitzenabschnitte (38) zu ermöglichen, sodass sich die Düsenspitzenabschnitte (38) in einer Richtung (C) rechtwinklig zur ersten Achse (A) und außerdem rechtwinklig zu den zweiten Achsen (B) bewegen können, die .

2. Heißkanaldüse nach Anspruch 1, **dadurch gekennzeichnet, dass** der Düsenbrückenseparator (35) eine Entlastungsaussparung (36) umfasst.

3. Heißkanaldüse nach einem der vorhergehenden Ansprüche, **dadurch gekennzeichnet, dass** der Winkel (α) zwischen der ersten Achse (A) und der zweiten Achse (B) im Bereich von 80° bis 160° liegt, insbesondere dass die erste Achse (A) im Wesentlichen im rechten Winkel (α = 90°) zur zweiten Achse (B) steht.

4. Heißkanaldüse nach einem der vorhergehenden Ansprüche, **dadurch gekennzeichnet, dass** jeder Düsenspitzenabschnitt (38) eine Stiftführungsvorrichtung (56, 57) für den Ventilstift (62, 63) aufweist.

5. Heißkanaldüse nach einem der vorhergehenden Ansprüche, **gekennzeichnet durch** mindestens zwei Düsenspitzenanordnungen, die jeweils mit einem der mindestens zwei Düsenspitzenabschnitten (38) verbunden sind, wobei die Düsenspitzenanordnung eine Düsenspitze (50) und eine Düsendichtung (52) aufweist.

6. Heißkanaldüse nach einem der vorhergehenden Ansprüche, wobei die Düsenspitzenabschnitte (38) abtrennbar verbundene Düsenspitzenhalter (34) umfassen.

7. Heißkanaldüse nach einem der vorhergehenden Ansprüche, **dadurch gekennzeichnet, dass** jede Heißkanaldüse (30) einen Ventilstiftanschluss (65) aufweist, der die Ventilstiftbetätigungsvorrichtung (60) mit mindestens zwei Ventilstiften (62, 62, 63, 63) kontinuierlich verbindet, wobei ein jeweiliger Kompensationsraum (69) zwischen jedem Ventilstift (62, 63) und dem Ventilstiftverbinder (65) vorgesehen ist, um eine lockere Verbindung zwischen dem Ventilstift (62, 63) und dem Ventilstiftverbinder (65) bereitzustellen.

8. Heißkanaldüse nach einem der vorhergehenden Ansprüche, **dadurch gekennzeichnet, dass** das Belasten der Ventilstifte (62, 63) und die Belastung zwischen den Ventilstiften (62, 63) und der Ventilstiftbetätigungsvorrichtung (60) mittels eines dazwischen angeordneten Kompensationsraums (69) verringert wird.

9. Heißkanaldüse nach einem der vorhergehenden Ansprüche, **gekennzeichnet durch** einen Düsenbrückenträgerabschnitt (39), der zwischen dem Düsenkörperabschnitt (32) und mindestens zwei Düsenbrückenabschnitten (33) angeordnet ist, wobei die Düsenspitzenabschnitte (38) neben dem Düsenbrückenträgerabschnitt (39) angeordnet sind.

10. Heißkanaldüse nach Anspruch 9, **dadurch gekennzeichnet, dass** der Düsenbrückenträgerabschnitt (39) mindestens zwei Düsenbrückenträgerabschnitte (40) umfasst, die neben dem Düsenkörperabschnitt (32) miteinander verbunden und durch einen Düsenbrückenträgerseparator (41) in Form eines Zwischenraums voneinander getrennt sind, der sich durch den Düsenbrückenträgerabschnitt (39) von der Unterseite (42) des Düsenbrückenträgerabschnitts (39) in Richtung der ersten Achse (A) und parallel zu den mindestens zwei Ventilstiften (62, 62, 63, 63) erstreckt, wobei der Düsenbrückenträgerseparator (41) insbesondere in seiner Höhe und Breite so ausgestaltet ist, dass er Bewegungen der Düsenbrückenträgerabschnitte (40) und der Düsenbrückenabschnitte (33) ermöglicht, und dadurch erlaubt, dass sich die Düsenbrückenabschnitte (33) und damit die Düsenspitzenabschnitte (38) in Richtung (C) bewegen.

11. Heißkanaldüse nach Anspruch 10, **dadurch gekennzeichnet, dass** der Düsenbrückenträgerseparator (41) eine Entlastungsaussparung (43) umfasst.

12. Heizkanalspritzgussvorrichtung (10) aufweisend:
einen Heißkanalverteiler (20), der einen Schmelzeinlasskanal (21) und eine Reihe von Schmelzauslassöffnungen (22) aufweist und
eine Anzahl von Heißkanaldüsen (30) nach einem der Ansprüche 1 bis 11, jeweils verbunden mit einer Schmelzauslassöffnung (22) des Verteilers (20).

13. Die Heißkanalspritzgussvorrichtung nach Anspruch 12, **dadurch gekennzeichnet, dass** eine Anzahl von Formhohlräumen (72) an den Heißkanaldüsen (30) angeordnet ist, wobei Düsendichtungen (52) der Heißkanaldüsen (30) in Öffnungen (73) gehalten werden, die an den Formhohlräumen (72) angeordnet sind.

## Revendications

1. Buse à canal chaud (30) pour entrée latérale pour une machine de moulage par injection, connectable à une ouverture de sortie de matière fondue (22) d'un collecteur à canal chaud (20), et comprenant :
une partie de bride de buse (31), une partie de corps de buse (32) et une partie de pont de buse (33) présentant au moins deux sections de pointe de buse agencées côte à côte de façon adjacente (38), et
au moins deux tiges de vanne (62, 62, 63, 63) couplées à un dispositif d'actionnement de tige de vanne (60), qui est déplaçable d'avant en arrière le long d'un premier axe (A), dans lequel lesdites au moins deux tiges de vanne (62, 62, 63, 63) sont déplaçables le long de seconds axes parallèles (B), qui sont agencés selon un angle (α) par rapport au premier axe (A),
**caractérisée en ce que** :
les sections de pointe de buse agencées côte à côte (38) sont connectées les unes aux autres adjacentes à la partie de corps de buse (32) et séparées par un séparateur de pont de buse (35) sous la forme d'un espace, qui s'étend à travers la partie de pont de buse (33) à partir de l'extrémité avant (37) de la partie de pont de buse (33) dans la direction du premier axe (A) entre et parallèlement auxdites au moins deux tiges de vanne (62, 62, 63, 63)
dans laquelle le séparateur de pont de buse (35) est conçu en particulier quant à sa hauteur et sa largeur de manière à accueillir des déplacements des sections de pointe de buse (38), permettant aux sections de pointe de buse (38) de se déplacer dans une direction (C) qui est perpendiculaire au premier axe (A) et qui est également perpendiculaire aux seconds axes (B).

2. Buse à canal chaud selon la revendication 1, **caractérisée en ce que** le séparateur de pont de buse (35) comporte un évidement de détente de charge (36).

3. Buse à canal chaud selon l'une quelconque des revendications précédentes, **caractérisée en ce que** l'angle (a) entre le premier axe (A) et le second axe (B) est compris dans la gamme de 80° à 160°, en particulier le premier axe (A) est sensiblement perpendiculaire (α = 90°) au second axe (B).

4. Buse à canal chaud selon l'une quelconque des revendications précédentes, **caractérisée en ce que** chaque section de pointe de buse (38) comprend un dispositif de guidage de tige (56, 57) pour la tige de vanne (62, 63).

5. Buse à canal chaud selon l'une quelconque des revendications précédentes, **caractérisée par** au moins deux agencements de pointe de buse, couplés chacun auxdites au moins deux sections de pointe de buse (38), dans laquelle l'agencement de pointe de buse comprend une pointe de buse (50) et un joint de buse (52).

6. Buse à canal chaud selon l'une quelconque des revendications précédentes, dans laquelle les sections de pointe de buse (38) comprennent des éléments de retenue de pointe de buse (34) connectés de façon détachable.

7. Buse à canal chaud selon l'une quelconque des revendications précédentes, **caractérisée en ce que** chaque buse à canal chaud (30) comprend un connecteur de tige de vanne (65), qui connecte de façon continue le dispositif d'actionnement de tige de vanne (60) auxdites au moins deux tiges de vanne (62, 62, 63, 63), dans laquelle un espace de réglage respectif (69) est prévu entre chaque tige de vanne (62, 63) et le connecteur de tige de vanne (65) dans le but de réaliser une connexion libre entre la tige de vanne (62, 63) et le connecteur de tige de vanne (65).

8. Buse à canal chaud selon l'une quelconque des revendications précédentes, **caractérisée en ce que** la sollicitation des tiges de vanne (62, 63) et la contrainte entre les tiges de vanne (62, 63) et le dispositif d'actionnement de tige de vanne (60) sont réduites au moyen d'un espace de réglage (69) agencé entre ceux-ci.

9. Buse à canal chaud selon l'une quelconque des revendications précédentes, **caractérisée par** une partie de support de pont de buse (39) agencée entre la partie de corps de buse (32) et au moins deux parties de pont de buse (33), dans laquelle les sections de pointe de buse (38) sont connectées adjacentes à la partie de support de pont de buse (39).

10. Buse à canal chaud selon la revendication 9, **caractérisée en ce que** la partie de support de pont de buse (39) comprend au moins deux sections de support de pont de buse (40) qui sont connectées l'une à l'autre adjacentes à la partie de corps de buse (32) et séparées par un séparateur de support de pont de buse (41) sous la forme d'un espace, qui s'étend à travers la partie de support de pont de buse (39) à partir du côté inférieur (42) de la partie de support de pont de buse (39) dans la direction du premier axe (A) et parallèlement auxdites au moins deux tiges de vanne (62, 62, 63, 63), dans laquelle le séparateur de support de pont de buse (41) est conçu en particulier quant à sa hauteur et sa largeur de manière à accueillir des déplacements des sections de support de pont de buse (40) et des parties de pont de buses (33), permettant aux parties de pont de buse (33) et de ce fait aux sections de pointe de buse agencées côte à côte (38) de se déplacer dans la direction (C).

11. Buse à canal chaud selon la revendication 10, **caractérisée en ce que** le séparateur de support de pont de buse (41) comporte un évidement de détente de charge (43) .

12. Appareil de moulage par injection à canal chaud (10), comprenant :
un collecteur à canal chaud (20) présentant un canal d'entrée de matière fondue (21) et un certain nombre d'ouvertures de sortie de matière fondue (22), et
un certain nombre de buses à canal chaud (30) selon l'une quelconque des revendications 1 à 11, couplées chacune à une ouverture de sortie de matière fondue (22) du collecteur (20).

13. Appareil de moulage par injection à canal chaud selon la revendication 12, **caractérisé en ce qu'**un certain nombre de cavités de moule (72) sont agencées au niveau des buses à canal chaud (30), dans lequel des joints de buse (52) des buses à canal chaud (30) sont maintenus dans des ouvertures (73) agencées au niveau des cavités de moule (72).
